# EUROPEAN PATENT SPECIFICATION

(11) **EP 2 739 010 B1**
(45) Date of publication and mention of the grant of the patent: **15.07.2015**
(21) Application number: 12461560.0
(22) Date of filing: 30.11.2012
(51) Int. Cl.: H04L 29/08

(54) **Method for improving reliability of distributed computer systems based on service-oriented architecture**
Verfahren zur Verbesserung der Zuverlässigkeit verteilter Computersysteme auf Grundlage von dienstorientierter Architektur
Procédé permettant d'améliorer la fiabilité de systèmes informatiques distribués basé sur une architecture orientée services

(43) Date of publication of application: 04.06.2014
(73) Proprietor: Politechnika Poznanska, 60-965 Poznan (PL)
(72) Inventor: Brzezinski, Jerzy, 60-471 Poznan (PL); Danilecki, Arkadiusz, 61-131 Poznan (PL); Holenko, Mateusz, 62-090 Rokietnica (PL); Kobusinska, Anna, 61-131 Poznan (PL); Zierhoffer, Piotr, 61-709 Poznan (PL)
(74) Representative: Pawlowski, Adam

(56) References cited:
- US-A1- 2009 055 443
- US-A1- 2010 191 796
- US-B1- 6 567 857

## Description

The object of the present invention is a method for improving reliability of distributed computer systems based on service-oriented architecture, which comprise a plurality of autonomous, independently operating computer system components The invention is especially suitable for medical systems and other systems that require certainty in relation to data, data storage reliability and certainty as to whether an operation has been executed or not.

Computer systems used in medical environments comprise numerous possibly unreliable modules such as servers, databases, mobile computers or other mobile electronic devices such as smartphones, mobile data readers etc. Such modules communicate by means of messages exchange and may comprise numerous subsystems being managed by different organizational units having different policies for ensuring reliability of data processing.

Distribution of separate modules of the computer system is a common source of problems and failures when reliability is considered. Such problems may relate to missing messages or multiplied messages (in general communication failures) also they may relate to temporary or permanent loss of stored data (caused for example by storage malfunction; so-called system components failures).

Methods for improving reliability of distributed computer systems, known from prior art, usually relate to systems managed by a single organizational unit. Such methods are based on creation of checkpoints, storage of data in a non-volatile memory resilient to failures or logging of messages and replaying them in case of failure of system component. A difficulty that arises here is that ensuring reliability for one (even each of a plurality) subset of elements belonging to a distributed computer system will not result in ultimate reliability of the system as a whole.

Prior art proposes a solution to the aforementioned problems by establishing a common protocol for messages exchange. Such protocol may be WS-ReliableMessaging (a standard of OASIS consortium published in 2008). The protocol defines a method by means of which the elements of a service-oriented-architecture-system shall communicate with each other. Further, the protocol defines behavior of the respective elements in case of message loss. The protocol assumes that the elements will transmit messages again in case of message loss. Possible duplicates are detected and removed. The aforementioned solutions allow for addressing only communication failures.

Another prior art solution is Oracle SOA Suite that comprises an engine for business processes such as Oracle BPEL Process Manager. The solution improves independency of separate elements of a system by saving ongoing transactions in a non-volatile memory (a database) and registering of messages and their subsequent resending in case of communication failures. This approach utilizes a technique in which in case of communication failures there is applied a so called compensation - a call of special procedures predefined appropriately by a specialized administrator of the system. Such procedures are dedicated for a given applications and define a method for recovery of a state assumed to be a correct state.

Documents US 6567857, US 20090055443 and US 20100191796 are further relevant prior art.

A prior art publication of a paper entitled "Recovery guarantees for general multi-tier applications" - (Roger Barga, David Lomet, Gerhard Weikum, Proceedings of International Conference on Data Engineering, ICDE 2002), discloses an approach based on messages logging. This method requires that each separate element shall have a functionality allowing for registering sent messages and received messages. The separate elements offer a guarantee regarding reliability that are in principle commitments of the respective elements regarding their behavior in case of a failure.

The registers of messages are periodically stored in a non-volatile memory wherein such storage may be enforced by the communication protocol. In case of failure of an element of a system, the state of the element is recovered by resending by a transmitting element appropriately selected messages stored in the register.

Such an approach guarantees correctness of the processing as far as the behavior of the system elements is in line with piecewise deterministic processing model ie. if for a given initial state, multiple processing of the same messages results in identical outcome and leads to an identical processing state and wherein changes of state are an effect of only messages processing and no other factors. This approach assumes that all elements are managed by a single organization and assumes changes in methods of operation of the respective system elements.

Therefore, as can be readily seen, enhancements of methods for improving reliability of distributed computer systems based on service oriented architecture would be very beneficial. Such enhancements shall be preferably useful in networks managed by different organizational units having different policies for ensuring reliability of data processing.

The aim of the present invention is to alleviate the aforementioned drawbacks of the prior art and present a method for improving reliability of distributed computer systems based on service oriented architecture.

The object of the present invention is a method for improving reliability of distributed computer systems based on service-oriented architecture, wherein the method comprises the steps of providing a source element; providing a destination element; connecting the source element and the destination element by means of a computer connection; allowing transmission of a message between the source element and the destination element; the method further comprises the step of associating each source element and each destination element with an intermediary module for intercepting respective messages; allowing each source element to transmit an outgoing message only via the associated intermediary module; processing the outgoing message at the associated intermediary module such that the outgoing message includes a header allowing for unambiguous identification of the message within the system; transmitting each message outgoing from the intermediary module to a Recovery Management Unit whereas the transmitting step is transparent to the source element; registering each message received by the Recovery Management Unit in a database; providing the message to the intermediary module associated with the destination element; processing the outgoing message at the intermediary module associated with the destination element such that the outgoing messages will reach the destination element in an order of reception by the intermediary module associated with the destination element; periodically verifying availability of the destination element by a failure detector associated with the destination element and in case the destination element is available providing the message from the intermediary module associated with the destination element to the destination element.

Preferably the destination element is configured to provide a response to the outgoing message of the source element and to provide a response via the intermediary module associated with the destination element, via the Recovery Management Unit and via the intermediary module associated with the source element.

Preferably, the Recovery Management Unit is under control of a separate organizational entity that is trusted to the remaining system elements.

Preferably, the intermediary module is implemented by means of a WWW browser plug-in software intercepting HTTP requests and responses.

Preferably, the Recovery Management Unit is configured to direct the outgoing message to an appropriate intermediary component associated with the destination element.

Preferably, the Recovery Management Unit is implemented according to REST (Representational State Transfer) architecture.

Preferably, each source or destination element has a single associated Recovery Management Unit.

Preferably, the source or the destination element is a client or a service.

Preferably, the Recovery Management Unit is configured to store a request message and a response to the request message.

Preferably, the Recovery Management Unit is configured to identify a value of highest message identifier that has all prior responses processed and to transmit back only a response that has a message identifier directly next in the order of the message identifiers subsequently updating the value of highest message identifier that has all prior responses processed.

Preferably, in case of a service failure detected by the failure detector, the failure detector is configured to notify the respective Service Intermediary Module and subsequently to execute a recovery of a service state of the associated Service, whereas the Service Intermediary Module component is configured to verify what is the value of the identifier of the last sent response associated with the recovered state of the Service and wherein subsequently the Service Intermediary Module element executed a process of gathering all response messages, registered by the associated Recovery Management Unit, having values of the identifiers higher that the identifier of the last sent response associated with the recovered state of the Service whereas thereafter the Service Intermediary Module re-sends the chosen messages to the service-element.

Preferably, in case of a client failure detected the client is configured to repeat previously sent requests after resuming operation whereas in case an associated Recovery Management Unit component comprises responses to the requests, the responses will be sent immediately without the requests being sent to the respective destination service element.

The object of the present invention is also computer software comprising program code means for performing all the steps of the computer-implemented method according to the present invention when said program is run on a computer.

The object of the present invention is also a computer readable recording medium storing computer-executable instructions performing all the steps of the computer-implemented method according to the present invention when executed on a computer.

These and other objects of the invention presented herein are accomplished by providing an improved system and method for enhanced reliability of distributed computer systems based on service oriented architecture. Further details and features of the invention, its nature and various advantages will become more apparent from the following detailed description of the preferred embodiments shown in a drawing, in which:
FIG. 1 presents a distributed computer systems based on service oriented architecture;
FIG. 2 shows a schematic diagram of messages processing in a distributed computer system
Fig. 3 depicts a block diagram of messages database; and
Fig. 4 presents a diagram of system behavior in case of failure.

The present method for improving reliability of distributed computer systems based on service oriented architecture, is designed with a use of approach utilizing messages logging, whereas the messages are stored in a separate element (preferably separate hardware unit located in a different place than the rest of the system elements) of the system. The method according to the present invention preferably utilizes HTTP communication protocol for data exchange between the system elements. All elements of the system must be implemented such that they fulfill requirements of the piecewise deterministic model of processing.

The elements-services are realized as network services. The computer system is supplemented with components used for failure detection, intermediary components and components for registering communication between any elements of the system.

The components responsible for registering messages are called RMU (Recovery Management Unit).

For each element of the system that may function as a client, there is a special component called CIM (Client Intermediary Module) that intercepts messages sent and directs them to an RMU and intercepts response messages in order to subsequently direct them to a Client. Additionally, for each element of the system that may function as a service, there is connected a special component called a Service Intermediary Module (SIM) that intercepts messages sent and directs them to a Service RMU and intercepts response messages in order to subsequently directs them to an RMU. Any communication between system elements (i.e. Client or Service) may only be effected by means of the aforementioned additional components.

Components detecting failures (failure detectors) are implemented as resident programs (software) on selected computers, which periodically verify availability of the elements-services. For example, by means of sending a HEAD request of the HTTP protocol. The HEAD command is useful for requesting a response identical to the one that would correspond to a GET request, but without the response body. This is useful for retrieving meta-information written in response headers, without having to transport the entire content.

A method for implementing the intermediary components for clients depends on capabilities of the elements-clients. For elements of a computer system of low processing capabilities (such as cellular telephones, medical tablets) the elements shall be configured such that they would direct network traffic to selected, more powerful elements operating as gateways.

The intermediary components may then be implemented as modules operating on gateways. Such modules listen on selected HTTP ports and intercept all network traffic on these selected port(s).

For elements having extended, complex capabilities such as World Wide Web applications executed with a use of web browser software on desktop computers of mobile computers, the intermediary components may be implemented as plug-ins to the web browser software. Such plug-in is implemented such that it may be invoked as a procedure handling an event of sending a request of GET, POST, PUT or DELETE.

For stand-alone software applications, written in programming languages such as Java, C#, the intermediary components may be implemented as a wrapper library laid over standard communication functions.

The intermediary components for elements-services are implemented by configuration of the respective services such that they use separate computers that operate as gateways, and installation of special software modules listening at HTTP port 80.

Before redirecting a message to an RMU component, the intermediary components supplement each message, destined to be delivered to an RMU, with appropriate message headers, while after reception of a message from an RMU component, before directing the message to an appropriate, associated element (a client of a service), the intermediary components remove the added message headers from the message.

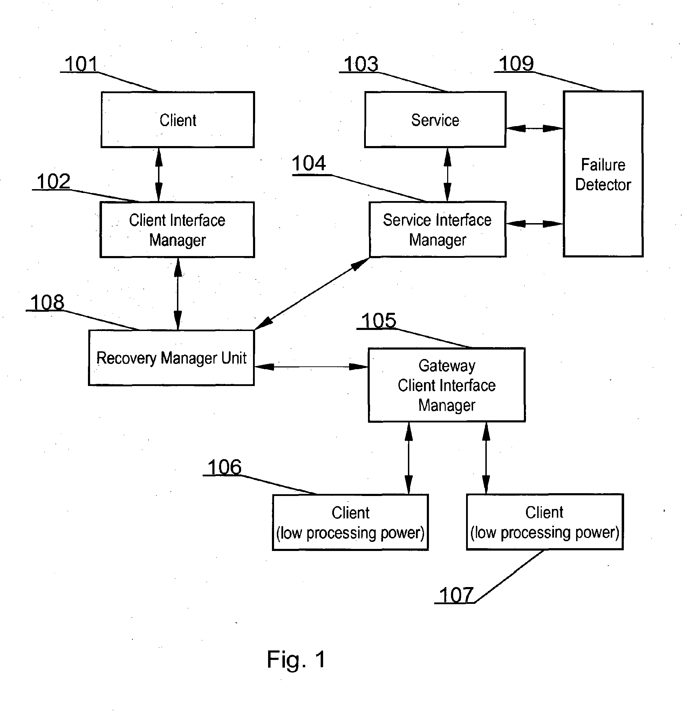

FIG. 1 presents a distributed computer systems based on service oriented architecture. As previously discussed the system may comprise elements that are clients 101, 106, 107 (element-client) and elements that are services 103 (element-service - there may be one or more service elements). The clients and the services communicate with the outside network by means of intermediary modules. In case of clients there is defined a Client Intermediary Module 102 as a module through which all network traffic passes that is directed from/to a client 101 associated with a particular Client Intermediary Module 102. All intermediary modules communicate their requests to a Recovery Management Unit 108 that is responsible for ensuring reliability as previously described in details. It is to be noted that there may be a plurality of Recovery Management Units 108 that may be addressed by the Service Intermediary Module and Client Intermediary Module modules.

Each Service Intermediary Module exchanges data with a failure detector 109. In Fig. 1 only one failure detector has been depicted not to obscure the drawing. The failure detector shall be configured to monitor the respective service in order to detect its failure and also be configured to notify respectively associated Service Intermediary Module element when a failure has been detected. In an alternative embodiment the failure detector 109 may be a part of respective Service Intermediary Module. This is to ensure notification about failure that otherwise cannot be provided by the respective service.

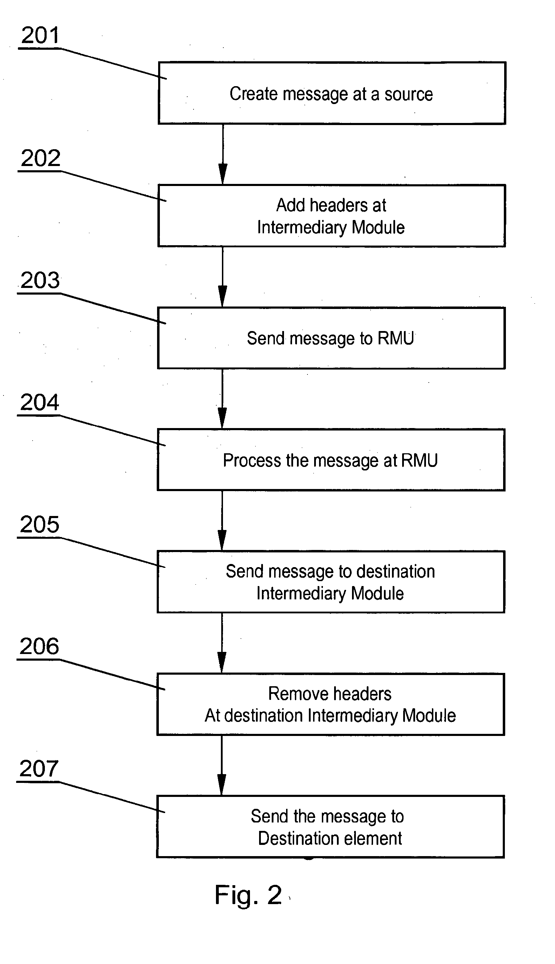

FIG. 2 shows a schematic diagram of messages processing in a distributed computer system. The method starts at step 201 where a source element defines a message that is to be sent to a destination system element. The message is sent to an associated intermediate module that at step 202 adds appropriate message headers in order to make the message suitable for transfer to a Recovery Management Unit. At step 203 the prepared message is sent to the Recovery Management Unit. The Recovery Management Unit processes the message data 204 and finds a destination element in order to send the message 205 to the destination intermediate module. Next, at step 206 the appropriate message headers are removed (in another embodiment there may be only identifier(s) removed), at the destination interface manager, in order to make the message suitable for transfer 207 to the destination element.

The method for ensuring system reliability, according to the present invention, requires that elements that are services are piecewise deterministic and that they set identifiers on the outgoing messages. The identifiers are preferably present in the message header and are subsequent integer numbers. According to the piecewise deterministic model of processing, requests shall be processed as if their execution was atomic.

Further, each element-service is configured to recover its state to a certain recovery point- preferably there exist several different recovery points, which can be utilized to recover the element-service state. According to the present invention each element-service makes available a set of HTTP addresses forming an interface allowing for identification of all recovery points (preferably by means of GET commands), that may be utilized during recovery of a given element.

Additionally, an element shall allow for recovery of its state in response to a POST request of HTTP protocol (the POST request utilizes a recovery point previously obtained by means of a GET request). Finally, for each state of element-service there is possible an identification of the value of the current identifier sent by the element-service. Such identification is preferably effected by means of a GET request, of the HTTP protocol, sent to an appropriate WWW address.

Another important requirement is that there shall exist a possibility of going back to an initial state, that is a state that reflects a state of the respective service before processing of any request (the identifier of the last sent message is equal to 0).

The Recovery Management Unit is responsible for registration of received requests in a non-volatile memory (a database). After storage of a message in the database (requests of GET type are preferably not stored), the Recovery Management Unit directs the message to appropriate intermediary components.

The Recovery Management Unit is preferably implemented as a network service available at a given address and accessible by means of the HTTP protocol. Preferably the Recovery Management Unit is also implemented according to REST (Representational State Transfer) architecture.

According to the present invention a message may be encrypted at the content level whereas a possibility must be ensured to identify certain headers. Because of such an arrangement the Recovery Management Unit and the intermediary modules do not have access to the message content, which leaves the content secure.

In case when the Recovery Management Unit and the intermediary modules are trusted elements, it is sufficient to establish a cryptographic link between the intermediary components and the Recovery Management Unit.

According to the present invention, each service and each client communicate with each other by means of the HTTP protocol. Each client and each service has a single associated Recovery Management Unit. Similarly each client has a single associated Client Intermediary Module while each service has a single associated Service Intermediary Module.

An intermediary component is associated preferably with a single element (a client or a service). An element may be at the same time a client and a service, when it is nested, and in such case it has two associated interface components: one Client Intermediary Module and one Service Intermediary Module. The Recovery Management Unit may simultaneously be associated with a plurality of services and/or a plurality of clients.

Preferably the intermediary components are computer software that may be installed at the same location as the system element or remotely. Each component Client Intermediary Module or Service Intermediary Module has a configured location/address of the associated RMU (stored in a place accessible by the component - such as a local configuration file). If a Service Intermediary Module receives a request directly from an element-client it shall redirect the request to the RMU component.

According to the present invention, a communication between system elements is initiated by a client element that sends a message with a request to execute a service to a service element. Invisibly (transparently) to the client the message is intercepted by a Client Intermediary Module component that directs it to the RMU that stores the message in the aforementioned database. Further the message is directed to a Service Intermediary Module component that passes the message to the service element. The service, after processing the request, sends a response comprising an identifier of a sequence of processing of requests. The response is intercepted by the Service Intermediary Module and directed to the RMU. Subsequently the RMU stores the response message in the aforementioned database but holds the response until the RMU has received all previously sent response messages by the respective service. When this condition is fulfilled, the RMU directs the response message to an appropriate Client Intermediary Module associated with the initiating client.

The RMU identifies a value of highest message identifier that has all prior responses processed (for example last_id). For example if the RMU sent requests having identifiers 1 to 10 and received responses having identifiers 1, 2, 3, 7 and 10 the responses having identifiers 7 and 10 are held and responses having identifiers 1 to 3 are transmitted to the respective clients. Accordingly the value of highest message identifier that has all prior responses processed is set to 3. In other words RMU will only to transmit back only a response that has a message identifier directly next in the order of the message identifiers and subsequently update the value of the highest message identifier that has all prior responses processed.

In case of a service failure, such fact is detected by a failure detector 109 that notifies a respective Service Intermediary Module component. After recovery of a service state, the Service Intermediary Module component verifies what is the value of the identifier of the last sent response associated with the recovered state of the service. Subsequently the Service Intermediary Module element gathers all response messages, registered by the associated RMU, having values of the identifiers higher that the identifier of the last sent response associated with the recovered state of the service. Service Intermediary Module re-sends the chosen messages to the service-element.

According to the model of preserving partial determinism, after subsequent processing of the sent responses the state of the service shall be equal the last state of the service perceived by the client(s) before a failure. In case an identifier associated with the recovered state is greater that the last_id, the Service Intermediary Module component requests the service to rollback to a state which associated identifier is lower that the last_id.

In case of a failure of a client, the client after resuming operation will repeat previously sent requests. If an RMU component comprises responses to the requests, they will be sent immediately without the requests being sent to the respective service element. Such behavior is repeated until the client sends another request that has not previously been processed by the requested service. For such a request the RMU will not have a response in the database and therefore the RMU will send the request to an appropriate service by means of an associated Service Intermediary Module component.

Algorithms and protocols used in the present invention in order to improve reliability of distributed computer systems based on service oriented architecture, have been presented for example in - A. Danilecki, A. Kobusinska, M. Hotenko, M. Szychowiak, P. Zierhoffer "ReServE service: An approach to increase reliability in service oriented systems." (Lecture Notes on Computer Science 6873, Springer Berlin, Berlin, 2011, str 244-256, presented on a PaCT conference in Kazan, Russia, 2011).

In a preferred embodiment, registering of messages is separated and moved to an RMU component, that may operate under control of an organizational unit independent from client(s) and/or service(s) of the system. A register of messages stored by the RMU may also be used in order to confirm that a communication was effected (confirmation without a doubt that a request was transmitted and a response to the request has been received back), that may be used for funds transfer purposes or disputes between clients and services.

An advantage of the present invention is that recovery of a state of an element of the system is realized fully independently from other elements. In particular recoverable states may be realized by keeping replicas of services - storage of recovery points, storage of backups etc. This allows for full autonomy of all elements of the system wherein each element may implement a different recovery policy depending on its resources and administrative setup. Such approach also allows for coexistence of elements having different reliability levels without negatively influencing the whole network system.

Another advantage of the present invention is that the messages stored at the RMU may not only be used for recovery of states of services (thereby achieving improved reliability) but also for network traffic monitoring purposes in which there is not any need to separately interact with network components in order to effect such monitoring.

The invention may be implemented in a platform for managing medical care events. Such system may comprise various elements. Clients may be computer-implemented applications executed on smartphones or desktop computers. For smartphones there may be a need to define gateways where there will be installed Client Intermediary Module. For desktop computers, a Client Intermediary Module module may be installed at the same physical machine together with other applications belonging to the system. For each element having assigned a role of a service (for example a service of patients' registration, patient's history etc.) shall have a Service Intermediary Module located preferably at the same physical machine that offers the service. In the example given, the RMU components may be installed together with the services, at the same physical machine, under control of an administrator of a given service.

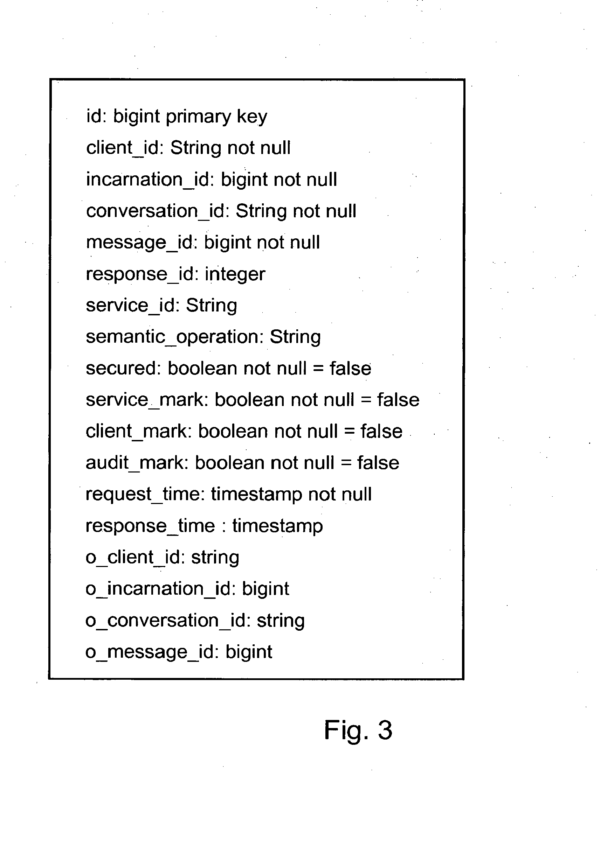

As previously explained, a Recovery Management Unit is responsible for registration of received requests in a non-volatile memory (a database). Such database has been depicted in Fig. 3. This is one of possible implementations of a database and other database structures may be defined in order to meet specific requirements of different real life implementations of a system and method according to the present invention.

The main database holds information regarding exchanged messages. The messages information table of Fig. 3 stores data in particular related to:
- id - identifier of the data processing context (i.e. an exchange of data in a form of request - response, the identifier is unique within an RMU);
- client_id - identifier of a client that sends a message (identifier is unique within complete system);
- incarnation_id - identifier of a client's incarnation (a time when a client is logged in to the system);
- request_id - identifier of a request of a client (a unique, increasing number of a request);
- conversation_id - identifier of a conversation of a client (this parameter may be optional in a sense that if a client does not provide it, the value is set to 0);
- response_id - identifier of a response at service side (this field remains empty until a response has been received);
- epoch_id - identifier of an epoch of service activity (this field remains empty until a response has been received);
- service_id - identifier of a service to which a request has been addressed (this field is filed based on an internal database of services registered at an RMU);
- semantic_operation - this field is optional and adds further semantic meaning to a message;
- secured - a flag defining whether a given context is secured for example with a HTTPS protocol;
- client_mark - a marker determining whether a given processing context has been marked by a client as obsolete (for example due to logout);
- service_mark - a marker determining whether a given processing context has been marked by a service (for example due to creation of a recovery point);
- audit_mark - a flag determining whether a given processing context shall be taken into account during an audit (this is an optional marking that prevents a too soon deletion);
- request_time - determines a time of arrival of a request (stored by an RMU);
- response_time - determines a time of arrival of a response to a request (stored by an RMU);
- o_(client_id, incarnation_id, conversation_id, message_id) - identifier of a request that resulted in generating of this nested request (filled out only in case of nested requests).

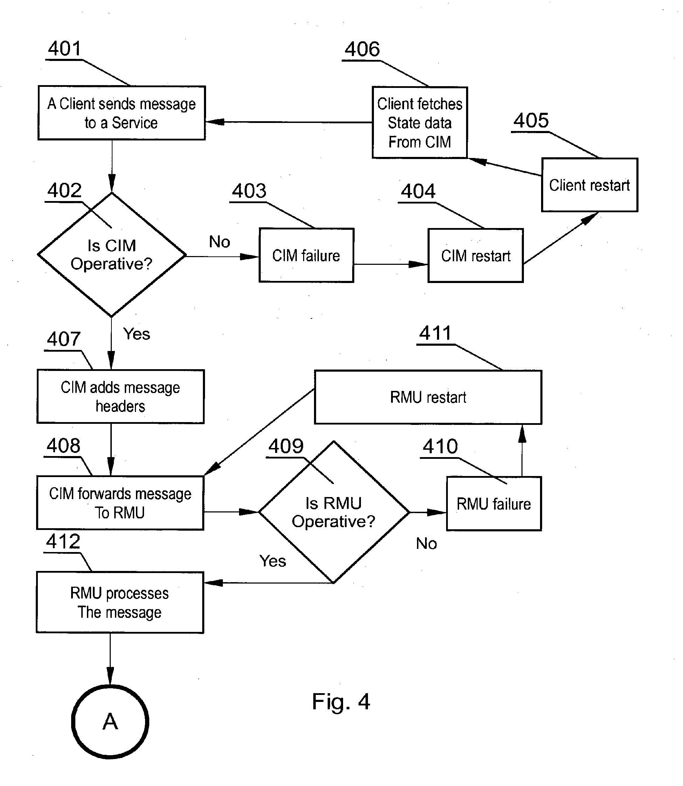

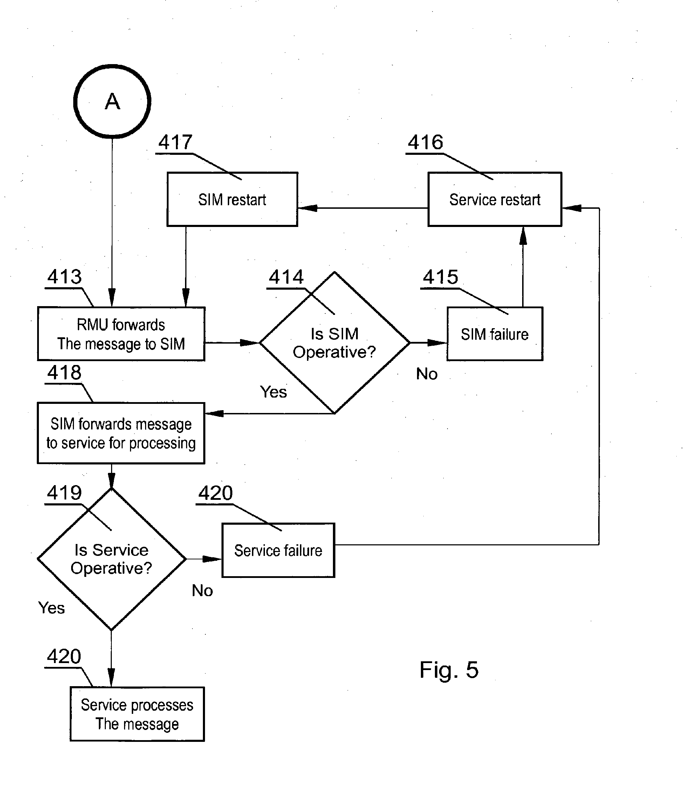

Fig. 4 presents a diagram of system behavior in case of a failure. The diagram presents a higher level overview from system's perspective wherein a client sends a message to a service. The process starts at step 401 where a client sends a message to a service element. It is subsequently verified, at step 402, whether an associated Client Intermediary Module is operative. In case when the associated Client Intermediary Module is not operative, at step 403 a failure is reported. Next at step 404 the Client Intermediary Module is restarted followed by a restart of the client 405. Further at step 406 of the procedure there is executed an action of the client fetching state data from the Client Intermediary Module. Thereafter the process returns to step 401.

In case the verification of step 402 returns 'true' the procedure advances to step 407 where the Client Intermediary Module adds message headers and subsequently forwards the message to a Recovery Management Unit 408.

The next step of the procedure is to verify, at 409, whether an associated Recovery Management Unit is operative. In case when the associated Recovery Management Unit is not operative, at step 410 a failure is reported. Next at step 411 the Recovery Management Unit is restarted. Thereafter the process returns to step 408.

In case the verification of step 409 returns 'true' the procedure advances to step 412 where the Recovery Management Unit processes the received message that is destined for a selected service element. The next step is forwarding 413 of the message from the Recovery Management Unit to a respective Service Intermediary Module.

The next step of the procedure is to verify, at 414, whether an associated Service Intermediary Module is operative. In case when the associated Service Intermediary Module is not operative, at step 415 a failure is reported. Next at step 416 the Service is restarted followed by a Service Intermediary Module restart at step 417. Thereafter the process returns to step 413.

In case the verification of step 414 returns 'true' the procedure advances to step 418 where the Service Intermediary Module forwards the message to an associated service for processing. Subsequently, at step 419, it is verified whether the respective service is operative. In case the respective service is not operative the process advances to step 416 whereas if the service is operative the process advances to step 420 there the respective service processes the message.

A return message from the Service to the Client may be sent in the same manner.

It can be easily recognised, by one skilled in the art, that the aforementioned system and method for improving reliability of distributed computer systems based on service oriented architecture may be performed and/or controlled by one or more computer programs. Such computer programs are typically executed by utilizing the computing resources in a computing device such as personal computers, personal digital assistants, cellular telephones, receivers and decoders of digital television or the like. Applications are stored in non-volatile memory, for example a flash memory or volatile memory, for example RAM and are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for improving reliability of distributed computer systems based on service-oriented architecture, wherein the method comprises the steps of:
- providing a source element (101, 106, 107);
- providing a destination element (103);
- connecting the source element and the destination element by means of a computer connection;
- allowing transmission of a message between the source element and the destination element;
the method being **characterized in that** it further comprises the step of:
- associating each source element and each destination element with an intermediary module (102) for intercepting respective messages;
- allowing each source element to transmit an outgoing message only via the associated intermediary module (102);
- processing the outgoing message at the associated intermediary module such that the outgoing message includes a header allowing for unambiguous identification of the message within the system;
- transmitting each message outgoing from the intermediary module to a Recovery Management Unit (108) whereas the transmitting step is transparent to the source element;
- registering each message received by the Recovery Management Unit in a database;
- providing the message to the intermediary module associated with the destination element (104);
- processing the outgoing message at the intermediary module associated with the destination element such that the outgoing messages will reach the destination element in an order of reception by the intermediary module associated with the destination element;
- periodically verifying availability of the destination element by a failure detector (109) associated with the destination element and in case the destination element is available providing the message from the intermediary module associated with the destination element to the destination element.

2. The method according to claim 1, **characterized in that** the destination element is configured to provide a response to the outgoing message of the source element and to provide a response via the intermediary module associated with the destination element, via the Recovery Management Unit and via the intermediary module associated with the source element.

3. The method according to claim 1, **characterized in that** the Recovery Management Unit is under control of a separate organizational entity that is trusted to the remaining system elements.

4. The method according to claim 1, **characterized in that** the intermediary module is implemented by means of a WWW browser plug-in software intercepting HTTP requests and responses.

5. The method according to claim 1, **characterized in that** the Recovery Management Unit is configured to direct the outgoing message to an appropriate intermediary component associated with the destination element.

6. The method according to claim 1, **characterized in that** the Recovery Management Unit is implemented according to REST (Representational State Transfer) architecture.

7. The method according to claim 1, **characterized in that** each source or destination element has a single associated Recovery Management Unit.

8. The method according to claim 1, **characterized in that** the source or the destination element is a client or a service.

9. The method according to claim 1, **characterized in that** the Recovery Management Unit is configured to store a request message and a response to the request message.

10. The method according to claim 9, **characterized in that** the Recovery Management Unit is configured to identify a value of highest message identifier that has all prior responses processed and to transmit back only a response that has a message identifier directly next in the order of the message identifiers subsequently updating the value of highest message identifier that has all prior responses processed.

11. The method according to claim 1, **characterized in that** in case of a service failure detected by the failure detector 109, the failure detector is configured to notify the respective Service Intermediary Module and subsequently to execute a recovery of a service state of the associated Service, whereas the Service Intermediary Module component is configured to verify what is the value of the identifier of the last sent response associated with the recovered state of the Service and wherein subsequently the Service Intermediary Module element executed a process of gathering all response messages, registered by the associated Recovery Management Unit, having values of the identifiers higher that the identifier of the last sent response associated with the recovered state of the Service whereas thereafter the Service Intermediary Module re-sends the chosen messages to the service-element.

12. The method according to claim 1, **characterized in that** in case of a client failure detected the client is configured to repeat previously sent requests after resuming operation whereas in case an associated Recovery Management Unit component comprises responses to the requests, the responses will be sent immediately without the requests being sent to the respective destination service element.

13. A computer program comprising program code means for performing all the steps of the computer-implemented method according to any of claims 1-12 when said program is run on a computer.

14. A computer readable medium storing computer-executable instructions performing all the steps of the computer-implemented method according to any of claims 1-12 when executed on a computer.

## Patentansprüche

1. Verfahren zur Verbesserung der Verlässlichkeit verteilter Computersysteme basierend auf einer serviceorientierten Architektur, wobei das Verfahren die Folgenden Schritte umfasst:
- Bereitstellen eines Quellelements (101, 106, 107);
- Bereitstellen eines Zielelements (103);
- Verbinden des Quellelements und des Zielelements mittels einer Computerverbindung;
- Zulassen der Übertragung einer Nachricht zwischen dem Quellelement und dem Zielelement;
wobei das Verfahren dadurch charakterisiert ist, dass es zusätzlich den folgenden Schritt umfasst:
- Verknüpfen jedes Quellelements und jedes Zielelements mit einem zwischengeschalteten Modul (102) zum Abfangen jeweiliger Nachrichten;
- Zulassen, dass jedes Quellelement eine abgehende Nachricht ausschließlich über das verknüpfte zwischengeschaltete Modul (102) überträgt;
- Verarbeiten der abgehenden Nachricht am verknüpften zwischengeschalteten Modul, sodass die abgehende Nachricht einen Header umfasst, welcher eine eindeutige Identifikation der Nachricht im System zulässt;
- Übertragen jeder Nachricht, die von dem zwischengeschalteten Modul abgeht, an eine Wiederherstellungs-Verwaltungseinheit (108), wobei der Übertragungsschritt für das Quellelement transparent ist;
- Registrieren jeder Nachricht, die von der Wiederherstellungs-Verwaltungseinheit empfangen wird, in einer Datenbank;
- Bereitstellen der Nachricht an das zwischengeschaltete Modul, das mit dem Zielelement (104) verknüpft ist;
- Verarbeiten der abgehenden Nachricht am zwischengeschalteten Modul, das mit dem Zielelement verknüpft ist, sodass die abgehenden Nachrichten das Zielelement in einer Reihenfolge des Empfangs durch das zwischengeschaltete Modul, das mit dem Zielelement verknüpft ist, erreichen;
- regelmäßiges Verifizieren der Verfügbarkeit des Zielelements durch einen Ausfalldetektor (109), der mit dem Zielelement verknüpft ist und für den Fall, dass das Zielelement verfügbar ist, Bereitstellen der Nachricht von dem zwischengeschalteten Modul, das mit dem Zielelement verknüpft ist, an das Zielelement.

2. Verfahren nach Anspruch 1, dadurch charakterisiert, dass das Zielelement so konfiguriert ist, dass es eine Antwort auf die abgehende Nachricht des Quellelements bereitstellt und eine Antwort über das zwischengeschaltete Modul, das mit dem Zielelement verknüpft ist, über die Wiederherstellungs-Verwaltungseinheit und über das zwischengeschaltete Modul, das mit dem Quellelement verknüpft ist, bereitstellt.

3. Verfahren nach Anspruch 1, dadurch charakterisiert, dass die Wiederherstellungs-Verwaltungseinheit von einer separaten Organisationseinheit gesteuert wird, die den restlichen Systemelementen zugewiesen ist.

4. Verfahren nach Anspruch 1, dadurch charakterisiert, dass das zwischengeschaltete Modul mittels einer WWW-Browser-Plug-in-Software implementiert wird, die HTTP-Anfragen und - Antworten abfängt.

5. Verfahren nach Anspruch 1, dadurch charakterisiert, dass die Wiederherstellungs-Verwaltungseinheit so konfiguriert ist, dass sie die abgehende Nachricht an eine geeignete zwischengeschaltete Komponente, die mit dem Zielelement verknüpft ist, weiterleitet.

6. Verfahren nach Anspruch 1, dadurch charakterisiert, dass die Wiederherstellungs-Verwaltungseinheit gemäß einer REST- (Representational State Transfer) -Architektur implementiert wird.

7. Verfahren nach Anspruch 1, dadurch charakterisiert, dass jedes Quell- oder Zielelement eine einzelne verknüpfte Wiederherstellungs-Verwaltungseinheit aufweist.

8. Verfahren nach Anspruch 1, dadurch charakterisiert, dass das Quell- oder das Zielelement ein Client oder ein Service ist.

9. Verfahren nach Anspruch 1, dadurch charakterisiert, dass die Wiederherstellungs-Verwaltungseinheit so konfiguriert ist, dass sie eine Anfragenachricht und eine Antwort auf die Anfragenachricht speichert.

10. Verfahren nach Anspruch 9, dadurch charakterisiert, dass die Wiederherstellungs-Verwaltungseinheit so konfiguriert ist, dass sie einen Wert einer höchsten Nachrichtenkennung identifiziert, in der alle vorherigen Antworten verarbeitet sind und dass sie nur eine Antwort zurück überträgt, die eine Nachrichtenkennung aufweist, die in der Reihenfolge der Nachrichtenkennungen direkt als nächstes folgt, wodurch anschließend der Wert der höchsten Nachrichtenkennung, in der alle vorherigen Antworten verarbeitet sind, aktualisiert wird.

11. Verfahren nach Anspruch 1, dadurch charakterisiert, dass im Fall eines Serviceausfalls, der von dem Ausfalldetektor 109 erkannt wird, der Ausfalldetektor so konfiguriert ist, dass er das jeweilige zwischengeschaltete Servicemodul benachrichtigt und anschließend eine Wiederherstellung eines Servicezustands des verknüpften Services ausführt, wobei die zwischengeschaltete Servicemodulkomponente so konfiguriert ist, dass sie verifiziert, welcher der Wert der Kennung der letzten gesendeten Antwort ist, die mit dem wiederhergestellten Zustand des Services verknüpft ist und wobei anschließend das zwischengeschaltete Servicemodulelement einen Prozess zum Sammeln aller von der verknüpften Wiederherstellungs-Verwaltungseinheit registrierten Antwortnachrichten ausführt, die Werte der Kennungen aufweisen, die höher sind als die Kennung der letzten gesendeten Antwort, die mit dem wiederhergestellten Zustand des Services verknüpft ist, wobei danach das zwischengeschaltete Zwischenmodul die ausgewählten Nachrichten wieder an das Serviceelement sendet.

12. Verfahren nach Anspruch 1, dadurch charakterisiert, dass im Fall eines erkannten Clientausfalls der Client so konfiguriert ist, dass er zuvor gesendete Anfragen wiederholt, nachdem er den Betrieb wiederaufnimmt, wobei für den Fall, dass eine verknüpfte Wiederherstellungs-Verwaltungseinheitkomponente Antworten auf die Anfragen umfasst, die Antworten umgehend gesendet werden, ohne dass die Anfragen an das jeweilige Zielserviceelement gesendet werden.

13. Computerprogramm, das ein Programmcodemittel zur Durchfiihrung aller Schritte des computerimplementierten Verfahrens nach einem beliebigen der Ansprüche 1-12 umfasst, wenn das Programm auf einem Computer ausgeführt wird.

14. Computerlesbares Medium, das computerausführbare Anweisungen speichert, die alle Schritte des computerimplementierten Verfahrens nach einem beliebigen der Ansprüche 1-12 durchführen, wenn sie auf einem Computer ausgeführt werden.

## Revendications

1. Une méthode d'optimisation de la fiabilité de systèmes informatique distribuée basée sur une architecture axée sur le service, ladite méthode comprenant les étapes suivantes :
- fourniture d'un élément source (101, 106, 107) ;
- fourniture d'un élément destination (103) ;
- connexion de l'élément source à l'élément destination par le biais d'une connexion informatisée ;
- transmission d'un message entre l'élément source et l'élément destination ;
la méthode étant **caractérisée par le fait qu'**elle comprend en outre une étape pour :
- associer chaque élément source et chaque élément destination à un module intermédiaire (102) pour l'interception de messages respectifs ;
- permettre à chaque élément source de transmettre un message sortant exclusivement par le biais du module intermédiaire (102) connexe ;
- assurer le traitement du message sortant au module intermédiaire connexe de sorte que le message sortant comprenne un titre permettant une identification sans ambiguïté du message au sein du système ;
- transmettre chaque message sortant d'un module intermédiaire à un dispositif de gestion de la récupération (108), l'étape de transmission étant transparente pour l'élément source ;
- enregistrer chaque message reçu par le dispositif de gestion de la récupération dans une base de données ;
- fournir le message au module intermédiaire associé à l'élément destination (104) ;
- traiter le message sortant au module intermédiaire associé avec l'élément destination de sorte que les messages sortants atteignent l'élément destination dans l'ordre de réception par le module intermédiaire associé avec l'élément destination ;
- vérifier périodiquement la disponibilité de l'élément destination par un détecteur de défaillance (109) associé avec l'élément destination, et, si l'élément destination est disponible, fournir le message du module associé à l'élément destination à ce dernier.

2. La méthode selon la revendication 1, **caractérisée par le fait que** l'élément destination est configuré pour fournir une réponse au message sortant de l'élément source, et fournir une réponse par le biais du module intermédiaire associé avec l'élément destination, via le dispositif de gestion de la récupération et le module intermédiaire correspondant à l'élément source.

3. La méthode selon la revendication 1, **caractérisée par le fait que** le dispositif de gestion de la récupération est sous le contrôle d'une entité organisationnelle distincte qui est confiée aux éléments restants du système.

4. La méthode selon la revendication 1, **caractérisée par le fait que** le module intermédiaire est mis en oeuvre par le biais d'un logiciel plug-in de navigation sur la www, interceptant des demandes et des réponses HTTP.

5. La méthode selon la revendication 1, **caractérisée par le fait que** le dispositif de gestion de la récupération est configuré pour diriger le message sortant vers un composant intermédiaire approprié correspondant à l'élément destination.

6. La méthode selon la revendication 1, **caractérisée par le fait que** le dispositif de gestion de la récupération est mis en oeuvre conformément à l'architecture REST (*Representational State Transfer).*

7. La méthode selon la revendication 1, **caractérisée par le fait que** chaque élément source ou destination possède son dispositif de gestion de la récupération unique.

8. La méthode selon la revendication 1, **caractérisée par le fait que** l'élément source ou l'élément destination est un client ou un service.

9. La méthode selon la revendication 1, **caractérisée par le fait que** le dispositif de gestion de la récupération est configuré pour mémoriser un message de demande et une réponse à ce message de demande.

10. La méthode selon la revendication 9, **caractérisée par le fait que** le dispositif de gestion de la récupération est configuré pour identifier une valeur d'identifiant de message supérieur assurant le traitement de toutes les réponses préalables, et retransmettre seulement une réponse possédant l'identifiant de message le suivant immédiatement dans l'ordre des identifiants de message, en actualisant ultérieurement la valeur de l'identifiant de message supérieur dont toutes les réponses précédentes ont été traitées.

11. La méthode selon la revendication 1, **caractérisée par le fait qu'**en cas de détection, par le capteur de défaillances 109, d'une défaillance du service, le capteur de défaillances est configuré pour notifier le Module intermédiaire de Service correspondant, et, par la suite, de procéder à une reprise d'un état de service du service connexe, alors que le composant du Module intermédiaire de Service est configuré pour vérifier quelle est la valeur de l'identifiant de la dernière réponse transmise correspondant à l'état de récupération du Service et l'élément du Module intermédiaire de Service ayant par la suite exécuté un processus de collecte de tous les messages de réponse, enregistrés par le Module intermédiaire de Service, et associé les valeurs des identifiants supérieurs à l'identifiant de la dernière réponse envoyée correspondant à l'état récupéré du Service, le Module intermédiaire de Service retransmettant ensuite les messages choisis à l'élément de service.

12. La méthode selon la revendication 1, **caractérisée par le fait qu'**en cas de détection d'une défaillance du client, le client soit configuré pour répéter des demandes transmises précédemment après la reprise de l'opération, alors que si un dispositif de gestion de la récupération connexe comprend des réponses aux demandes, les réponses sont transmises immédiatement sans que les demandes soient transmises à l'élément de service de destinataire correspondant.

13. Un programme informatique comprenant un dispositif à code programme pour l'exécution de toutes les interventions de la méthode mise en oeuvre par ordinateur selon une quelconque des revendications 1 à 12, lorsque ledit programme est exécuté sur un ordinateur.

14. Un support pouvant être lu par ordinateur mémorisant des instructions exécutables par ordinateur exécutant toutes les interventions de la méthode mise en oeuvre par ordinateur selon une quelconque des revendications 1 à 12, lors de leur exécution sur un ordinateur.
